# EUROPÄISCHE PATENTSCHRIFT

(11) **EP 1 569 780 B1**
(45) Veröffentlichungstag und Bekanntmachung des Hinweises auf die Patenterteilung: **31.05.2006**
(21) Anmeldenummer: 03795868.3
(22) Anmeldetag: 02.12.2003
(51) Int. Cl.: B29C 44/34

(54) **VERFAHREN UND VORRICHTUNG ZUR HERSTELLUNG GESCHÄUMTER POLYURETHAN-FORMKÖRPER**
METHOD AND DEVICE FOR PRODUCING EXPANDED POLYURETHANE MOULDED BODIES
PROCEDE ET DISPOSITIF POUR LA PRODUCTION DE CORPS MOULES EN POLYURETHANNE EXPANSES

(30) Priorität: 14.12.2002 DE 10258546
(43) Veröffentlichungstag der Anmeldung: 07.09.2005
(73) Patentinhaber: Stankiewicz GmbH, D-29352 Adelheidsdorf (DE)
(72) Erfinder: FRESER-WOLZENBURG, Thomas, 30827 Garbsen (DE); PRAHST, Georg-Wilhelm, 31867 Lauenau (DE)
(74) Vertreter: Moldenhauer, Herbert
(86) Internationale Anmeldenummer: PCT/EP2003/013578
(87) Internationale Veröffentlichungsnummer: WO 2004/054777

(56) Entgegenhaltungen:
- EP-A- 0 855 260
- DE-A- 2 212 609
- DE-A- 19 938 140
- GB-A- 1 566 946
- US-B1- 6 361 723
- DATABASE WPI Section Ch, Week 198649 Derwent Publications Ltd., London, GB; Class A32, AN 1986-322883 XP002279535 -& JP 61 239916 A (MITSUBISHI PLASTICS IND LTD) 25. Oktober 1986 (1986-10-25)

## Beschreibung

### Technisches Gebiet

Die Erfindung betrifft ein Verfahren zur Herstellung geschäumter Polyurethan-Formkörper gemäß dem Obergriff des Anspruchs 1.

### Stand der Technik

Ein solches Verfahren gemäß dem Oberbegriff des Anspruchs 1 ist aus der EP 0 855 260 A2 bekannt. Die Ventilkapillare wird dabei durch den Spalt zwischen einem kegeligen Kolben und einer den Kolben umschließenden, hohlkegeligen Expansionsöffnung eines Durchmessers von 30 bis 400 mm, wobei zwischen der Mündung der Expansionsöffnung und dem Drucksensor eine von dieser getrennte Kammer eines erweiterten Querschnitts angeordnet ist mit einer zusätzlich darin enthaltenen Kolben-/Zylindereinheit zur Hin- und Herbewegung des Kolbens.

Aus der DE-A-2 212 609 ist ein Verfahren bekannt, bei dem in einem Entlüftungskanal der Form ein Hohlrohrkolben angeordnet ist, der durch einen in dem Entlüftungskanal angeordneten Drucksensor ansteuerbar und eine Bohrung mit einem Abzweig enthält, um in die Expansionsöffnung eingedrungenes Polyurethan mittels Druckluft seitlich ausspülen zu können.

Ein anderes Verfahren ist aus der DE 197 01 728 C2 bekannt. Dabei ist es vorgesehen, Gase durch in der oberen Formhälfte angeordnete Expansionsöffnungen abzusaugen, die einen runden oder schlitzförmigen Querschnitt haben können und eine Weite von 0,1 bis 0,5 mm. Sie können mit einem nadelförmigen Ausstoßkolben versehen sein. Der expandierende Schaum dringt in die Expansionskanäle ein und verschließt sie während seiner Aushärtung. Die dabei in den Expansionskanälen nach der Entformung eines jeden hergestellten Werkstücks zurückbleibenden Schaumreste müssen jeweils nachträglich gesondert entfernt werden. Der Ausstoßkolben wird zu diesem Zweck eigens mittels einer Hydraulik aus den Expansionskanälen herausgefahren, um die in diese eingedrungenen Polyurethanreste entfernen zu können. Ein Ventil ist in den Expansionskanälen nicht enthalten.

Nachteilig an dem bekannten Verfahren ist, dass der Formkörper durch das in die Expansionskanäle eindringende und beim Entformen des Werkstücks an Undefinierten Stellen abreißende Polyurethan angussartige Fortsätze aufweisen kann, die zusammen mit den Schwimmhäuten in einer aufwendigen Nachbearbeitung wieder entfernt werden müssen. Bei räumlich stark ausgedehnten Formschaumteilen mit langen Fließwegen ist weiterhin zu beachten, dass die Schaumfront zu stark unterschiedlichen Zeitpunkten die Expansionskanäle erreicht. Damit ist die Polyurethan-Reaktivmischung bei den Expansionskanälen, die sie zuerst erreicht, aufgrund der noch nicht weit fortgeschrittenen Polymerisationsreaktion noch sehr fließfähig und kann damit weit in den Expansionskanal eindringen. Damit besteht auch die Gefahr, dass die Expansionsöffnung insgesamt blockiert wird.

Aus der DE 199 38 140 A1 ist ein ähnliches Verfahren bekannt, bei dem der Schließkolben eines Ventils über einen elektrischen Stellmotor positionierbar ist und das Ventil beim Eintritt der Schaumfront in die Expansionsöffnung diese sofort schließt.

Nadelventile zur Steuerung der Entlüftungsvorgänge sind darüber hinaus aus der DE 693 11 728 T2 und aus der EP 0753 389 B 1 bekannt.

Es ist ferner bekannt, geschäumte Polyurethan-Formkörper durch Einfüllen einer expandierbaren Polyurethan-Reaktivmischung in eine durch eine Formtrennebene geteilte Form und Evakuieren der Form über einen in der Formtrennebene umlaufenden Vakuumkanal, herzustellen. Hierzu hat es bereits eine Reihe von Vorschlägen gegeben; siehe z.B. DE-OS 15 04 278, DE 30 20 793 A1 und EPO 023 749 A 1. Die Evakuierung der Form ist insbesondere erforderlich, um das in der Form befindliche Gas zur Vermeidung der Lunkerbildung aus der Form zu entfernen. Damit dies gelingt, ist es erforderlich, die Formhälften so zu gestalten, dass die Formtrennebene im höchsten Punkt des Formhohlraums liegt, da sich anderenfalls ein Nest bildet, aus dem das vorhandene Gas nicht mehr abgezogen werden kann. Dem könnte dadurch begegnet werden, dass das Formnest auf einen sehr niedrigen Druck von unterhalb 100 mbar, insbesondere unterhalb 50 mbar, vor dem Aufsteigen des Schaums, d. h. bevor die Höhe des Schaums im Formnest die Formtrennebene überschreitet, evakuiert wird. Ein solch niedriger Druck im Formnest führt aber dazu, dass der Schaum anfänglich schnell und stark expandiert, bevor noch wesentliche Treibmittelgehalte freigesetzt sind, so dass nur eine unregelmäßige Schaumstruktur entsteht. Ein weiterer Nachteil der Evakuierung über die Formtrennebene besteht darin, dass insbesondere wenn die expandierbare Reaktivmischung in die offene Form eingefüllt wird und erst nach Schließen der Form evakuiert wird, die Förderleistung über die Formtrennebene relativ gering ist, so dass sehr lange Zykluszeiten erforderlich sind und somit die Zeit für die Evakuierung die Taktzeit verlängert.

Die Eigenschaften von Polyurethanschaum sind wesentlich durch die Dichte des fertigen Schaums und die Materialeigenschaften der Matrix bestimmt. Insbesondere wenn Wasser als chemisches Treibmittel eingesetzt wird, wobei durch die Reaktion des Wassers mit dem Isocyanat Kohlendioxid freigesetzt wird, ist eine genaue Abstimmung der Rezeptur der expandierbaren Polyurethan-Reaktivmischung zur Einstellung der Matrix-Eigenschaften erforderlich. Daher ist es grundsätzlich wünschenswert, mit einer einzigen Rezeptur Schäume mit unterschiedlichen Rohdichten herstellen zu können. Zur Steuerung der Dichte eines Schaums bei gleichzeitiger Beibehaltung der Rezeptur, insbesondere des Treibmittelgehaltes, ist eine Steuerung des Druckes in der Schäumform hervorragend geeignet, siehe z.B. B. EP 0 023 749 A1, EP 0 044 226 A1 und DE 197 01 728 C2.

Die EP 0 023 749 A1 betrifft ein Verfahren zur Unterdruckverschäumung von Blockschaum mit Schaumblockgrößen von typischerweise 2 x 1 x 1 m³ (siehe hierzu Seite 7, Zeile 12, der EP 0 023 749 A1). Für die Evakuierung der Blockschaumform ist, wie aus Figur 1 der EP 0 023 749 A1 ersichtlich ist, lediglich eine Leitung 19 bzw. 20 vorgesehen. Um eine Evakuierung der Form innerhalb vertretbarer Zeiten (d.h. ohne wesentliche Verlängerung der Taktzeiten, die in etwa der Aushärtzeit entsprechen) zu ermöglichen, müssen die Leitungen 19 und 20 aus Figur 1 der EP 0 023 749 A1 in Abhängigkeit von der Formgröße einen erheblichen Querschnitt aufweisen. Der Eintritt in die Leitungen ist gemäß der EP 0 023 749 A1 nicht verschließbar ausgestaltet; vielmehr sind, wie ebenfalls aus der Figur 1 der Druckschrift zu ersehen ist, Absperrventile 1 und 2 erst am Ende der Leitungen 19 und 20 vorgesehen. Würde die Vorrichtung so betrieben, dass am Ende des Schäumprozesses Unterdruck herrscht, würde der Schaum in die Leitungen 19 bzw. 20 eindringen und dort aushärten.

Gemäß DE 23 66 184 B 1 ist ein Filter (in der einzigen Figur der Druckschrift mit dem Bezugszeichen 46 versehen) in der Expansionsöffnung der Form vorgesehen. Das Filter muss nach jedem Schäumprozess verworfen werden. Ferner stellt das Filter einen relativ großen Strömungswiderstand dar, so dass eine Schnellevakuierung der Form nicht möglich ist.

Auch die DE 30 20 793 A1 beschreibt keine Trennung zwischen Schnellevakuierung und Restgasabsaugung. Vielmehr ist ein Evakuierungsspalt in der Formtrennebene selbst vorgesehen, der für relativ flache Formteile mit im Vergleich zum Umfang relativ flachem Volumen, für eine schnelle Evakuierung ausreichen mag und durch die eindringende Schaummasse verschlossen wird. Dies führt zu einer "Schwimmhaut", die anschließend i.d.R. händisch entfernt werden muss.

### Darstellung der Erfindung

Aufgabe der Erfindung ist, ein Verfahren der eingangs beschriebenen Art so weiterzuentwickeln, dass auch bei langen Fließwegen und bezüglich der Formtrennebene ungünstigen Bedingungen lunkerfreie Teile in kurzen Taktzeiten produziert werden können und das Eindringen des Polyurethans in das Unterdrucksystem zu vermeiden.

Diese Aufgabe wird erfindungsgemäß gelöst mit einem Verfahren, das alle Merkmale von Patentanspruch 1 aufweist. Die erfindungsgemäße Vorrichtung ist im Patentanspruch 7 beschrieben. Die auf die vorgenannten Ansprüche jeweils rückbezogene Unteransprüche betreffen vorteilhafte Ausgestaltungen der Erfindung.

Erfindungsgemäß ist es vorgesehen, bei einem Verfahren zur Herstellung geschäumter Polyurethan-Formkörper nach dem Oberbegriff den zeitlichen Druckverlauf in der Ventilkapillare zu erfassen und zur Steuerung des Ventils zu verwenden, wobei die Steuerung so ausgelegt ist, dass das Ventil bei dem durch das Eindringen der Schaumfront in die Ventilkapillare ausgelösten Druckabfall sofort schließt.

Es hat sich gezeigt, dass bei Einsatz eines Nadelventils anstelle der aus der DE 197 01 728 C2 bekannten Expansionsöffnung die Ausbildung angussartiger Fortsätze vollständig vermieden werden kann. Es ist hierzu lediglich erforderlich, das Ventil so zu steuern, dass es schon beim ersten Eindringen der Schaumfront in die Ventilkapillare sofort schließt. Zu diesem Zeitpunkt ist der Polyurethanschaum offensichtlich noch nicht vollständig ausreagiert und lässt sich in einfacher Weise durch die zum Schließen des Ventils in der Kapillare nach unten fahrende Ventilnadel aus der Kapillare ausstoßen, noch bevor es zur Ausbildung eines angussartigen Fortsatzes kommen kann. Hierdurch entfällt der aus dem Stand der Technik bekannte aufwendige Nachbearbeitungsprozess.

Dieses Ergebnis ist um so überraschender, als in der DE 197 01 728 C2 eine sehr komplexe Geometrie für die Expansionsöffnungen und die Reinigungsstößel vorgesehen ist, durch die zum einen gewährleistet sein soll, dass das Polyurethan nicht zu weit in das Unterdrucksystem eindringen kann und zum anderen der Reinigungsprozess für die Expansionsöffnung vereinfacht werden soll. Diese Problematik lässt sich durch den erfindungsgemäßen Einsatz eines Nadelventils völlig umgehen. Durch das Schließen des Ventils beim ersten Eindringen der Schaumfront in die Kapillare ist das weitere Vordringen des Polyurethans in das Unterdrucksystem vollständig unterbunden. Dadurch, dass bereits vorhandenes Polyurethan bereits beim Schließen des Ventils aus der Ventilkapillare wieder ausgestoßen wird, entfällt nicht nur, wie oben bereits erwähnt, die Nachbearbeitung des Schaum-Formkörpers, sondern auch noch der bei dem bekannten Verfahren erforderliche Reinigungsprozess, bei welchem Polyurethanreste teilweise sogar unter Einsatz von Bohrwerkzeugen wieder entfernt werden müssen. Hieraus resultiert somit noch eine weitere wesentliche Verfahrensvereinfachung.

Ein weiterer Vorteil ist die Möglichkeit einer Prozesssteuerung über die Ventile. Während bei dem bekannten Verfahren ein Eingriff in den Expansionsprozess nicht vorgesehen und auch nicht möglich ist, sind bei dem erfindungsgemäßen Verfahren über die Möglichkeit, die Ventile nach Belieben ansteuern zu können, die unterschiedlichsten Varianten einer Prozesssteuerung denkbar. So kann beispielsweise der Druck in der Form in Abhängigkeit von der Rezeptur der Reaktivmischung eingestellt werden. Weiterhin ist eine Steuerung und/oder Regelung des Absaugdrucks während des Expansionsprozesses denkbar oder die Einstellung unterschiedlicher Absaugleistungen beim Einsatz mehrerer Expansionsventile bei räumlich ausgedehnten Formen.

Nadelventile, wie sie hier verwendet werden, sind in vielen Anwendungsgebieten Stand der Technik. Es hat sich in überraschender Weise gezeigt, dass herkömmliche Nadelventile verwendet werden können, ohne irgendeine besondere Anpassung an die erfindungsgemäße Verwendung. Es ist zum sauberen Ausstoßen eines nicht vollständig ausreagierten Polyurethanreaktionsgemisches mit dem Ventilstößel des Nadelventils lediglich erforderlich, dass das Nadelventil mit einer ausreichenden Präzision gefertigt ist.

Die Herstellung von Polyurethanschaum ist an sich bekannt und wird hier nicht weiter beschrieben. Das erfindungsgemäße Verfahren bzw. die Vorrichtung sind nicht auf spezielle Verfahrensvarianten, insbesondere Rezepturen oder Prozessführungen, beschränkt, sondern ist universell einsetzbar. So kann das Einfüllen der Reaktivmischung sowohl in die offene als auch in die geschlossene Form erfolgen, wobei der Schäumvorgang ohne Beschränkung der Allgemeinheit sowohl durch die Beladung mit Kohlendioxid oder einem anderen Treibgas, wie zum Beispiel Luft, Stickstoff etc., als auch mit herkömmlichen Treibmitteln, wie zum Beispiel Wasser oder einer Kombination von Treibmitteln ausgelöst werden kann. Je nach Verfahrensvariante kann dann die Evakuierung der Form über die Unterdruckventile auf einen Unterdruck von minimal 300 mbar erfolgen. Nach dem Aufschäumen und Abbinden der Reaktivmischung wird schließlich die Form in an sich bekannter Weise belüftet, geöffnet und das Formteil ggf. mit Unterstützung durch Pressluft ausgeworfen.

In einer bevorzugten Ausführungsform der Erfindung ist vorgesehen, nicht nur das Absaugen der freigesetzten Gase während des Expansionsprozesses, sondern auch noch die Evakuierung der Form ebenfalls über die Nadelventile vorzunehmen. Damit entfällt die Notwendigkeit einer zusätzlichen Absaugöffnung wie auch der Evakuierung über die Formtrennebene. Da die Abdichtung der Expansionsöffnung bei dem erfindungsgemäßen Verfahren nicht wie bei dem bekannten Verfahren über die Aushärtung eines Schaumpfropfens in dem Absaugkanal erfolgt, woraus ein maximal möglicher Durchmesser für die Kapillare resultiert, da andernfalls das Polyurethan zu weit in das Unterdrucksystem eindringen würde, bevor es aushärtet, sondern einfach durch Schließen des Ventils, können die geometrischen Abmessungen der Kapillare ohne weiteres an diese Zusatzfunktion angepasst werden.

Bevorzugt werden Kapillardurchmesser zwischen 0,2mm und 2mm. Wird der Kapillardurchmesser kleiner als 0,2mm gewählt, sinkt der Volumenstrom an Reaktionsgasen, der durch die Kapillare abgeführt werden kann stark ab, da der Druckverlust umgekehrt proportional zum Kapillardurchmesser ist. Dadurch erhöht sich entweder die Taktzeit oder es wird eine höhere Zahl an Ventilen benötigt.

Wird er dagegen größer als 2 mm gewählt, wird aufgrund des geringen Druck- Verlustes die Erfassung der für die Schließung des Ventils bestimmenden Änderung der Durchströmung der Kapillare beim Eindringen des Schaums erschwert. Der Ausgleich über die Verlängerung der Kapillare (der Druckverlust nach Hagen-Poiseuille ist proportional 1/d (= Länge zu Durchmesser der Kapillare)) hat erheblichen Einfluss auf die Baugröße, die im Sinne der Montagemöglichkeiten an bzw. in der Form klein zu halten ist.

In einer weiteren bevorzugten Ausführungsform der Erfindung wird zur Steuerung des(r) Nadelventils(e) eine sich mit Eintritt der Schaumfront in die Ventilkapillare rasch ändernde chemische und/oder physikalischen Größe erfasst und das Nadelventil in Abhängigkeit von dem zeitlichen Verlauf dieser Größe gesteuert. Diese Art der Ansteuerung hat den Vorteil, dass das Ventil beim Eindringen der Schaumfront in die Kapillare sofort autark schließt.

Vorzugsweise wird als Steuergröße der zeitliche Druckverlauf in der Ventilkapillare erfasst, wobei die Steuerung so ausgelegt ist, dass das Ventil durch den beim Eindringen der Schaumfront in die Ventilkapillare auftretenden Druckabfall in der Kapillare sofort schließt. Nach dem Gesetz von Hagen-Poiseuille ist der Druckverlust in der Kapillare von der Viskosität des durchströmenden Mediums abhängig. Beim Eindringen der Schaumfront steigt der Druckverlust aufgrund des Unterschieds der Viskosität von Polyurethan gegenüber der von Luft etwa um einen Faktor 10⁵ - 10⁶. Zur Druckerfassung ist daher erfindungsgemäß in der Kapillare ein Drucksensor vorgesehen, dessen Ausgangssignal einer Steuereinheit zugeführt und durch die Steuereinheit in ein Steuersignal für die Bewegung der Ventilnadel umgewandelt wird. Als Drucksensoren sind beispielsweise die an sich bekannten Piezo-Drucksensoren geeignet.

Eine weitere Größe zur Steuerung des Ventils im obigen Sinne kann beispielsweise auch die Durchflussmenge durch die Ventilkapillare sein, die aus den gleichen Gründen wie oben beschrieben beim Eindringen der Schaumfront in die Kapillare um einen vergleichbaren Faktor abfällt. Das erfindungsgemäße Verfahren ist jedoch nicht auf diese beispielhaft aufgeführten, besonders geeigneten Steuergrößen beschränkt.

In weiteren bevorzugten Ausführungsformen der Erfindung werden die Nadelventile zusätzlich zum Belüften der Form und/oder zum Beaufschlagen der Form mit Pressluft zur Entnahmeunterstützung genutzt. Auch hierdurch verringert sich die Zahl der Bauteile, was Kostenvorteile mit sich bringt.

Eine zusätzliche Vereinfachung einer Anlage zum Herstellen von Polyurethan-Formkörpern ergibt sich dadurch, dass mehrere Nadelventile jeweils aus einer gemeinsamen Medienversorgung mit Unterdruck bzw. Pressluft versorgt werden. Durch die für jedes Ventil autarke Regelung über ein Proportionalventil kann gleichwohl an jedem Nadelventil individuell ein Unterdruck eingestellt werden.

Nachfolgend wird die Erfindung anhand der Figuren näher erläutert.

Es zeigen:
Figur 1: in schematischer Längsschnittdarstellung ein gemäß der Erfindung über einen Drucksensor ansteuerbares Nadelventil;
Figur 2: in schematischer Längsschnittdarstellung eine erfindungsgemäße Vorrichtung mit einem Nadelventil;
Figur 3: in einer schematischen Längsschnittdarstellung eine erfindungsgemäße Vorrichtung mit mehreren Nadelventilen und einer gemeinsamen Unter- bzw. Überdruckversorgung;
Figur 4: schematisch den Verlauf des Drucks in der Ventilkapillare während des Aufschäumprozesses und beim Eindringen der Schaumfront in das Ventil.

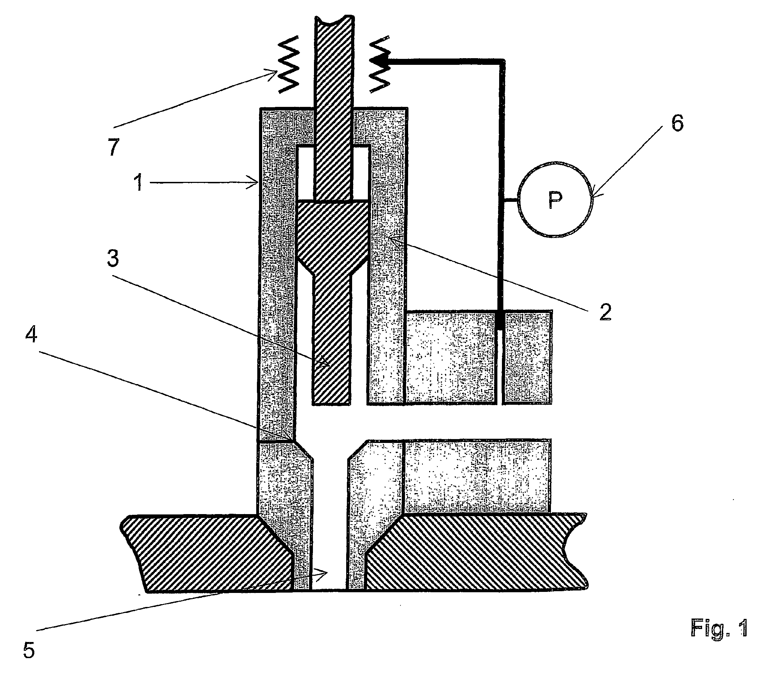

In Figur 1 ist ein für die Durchführung des erfindungsgemäßen Verfahrens geeignetes Nadelventil 1 dargestellt. Das Nadelventil 1 umfasst im wesentlichen ein Gehäuse 2, eine Ventilnadel 3 und einen Ventilsitz 4 sowie eine Kapillare 5. Weiterhin erkennt man einen Drucksensor 6. Sobald die Schaumfront in die Ventilkapillare 5 eindringt, fällt der Druck in der Kapillare 5 steil ab. Dieser Druckabfall wird von dem Drucksensor 6 detektiert und über eine in der Figur nicht dargestellte Steuereinheit in ein Steuersignal für den Ventilantrieb 7 umgewandelt. Dieses Steuersignal bewirkt, dass die Ventilnadel 3 nach unten fährt und das Ventil 1 schließt. Das in die Kapillare 5 bereits eingedrungene Polyurethan wird dabei durch die Ventilnadel 3 ausgestoßen.

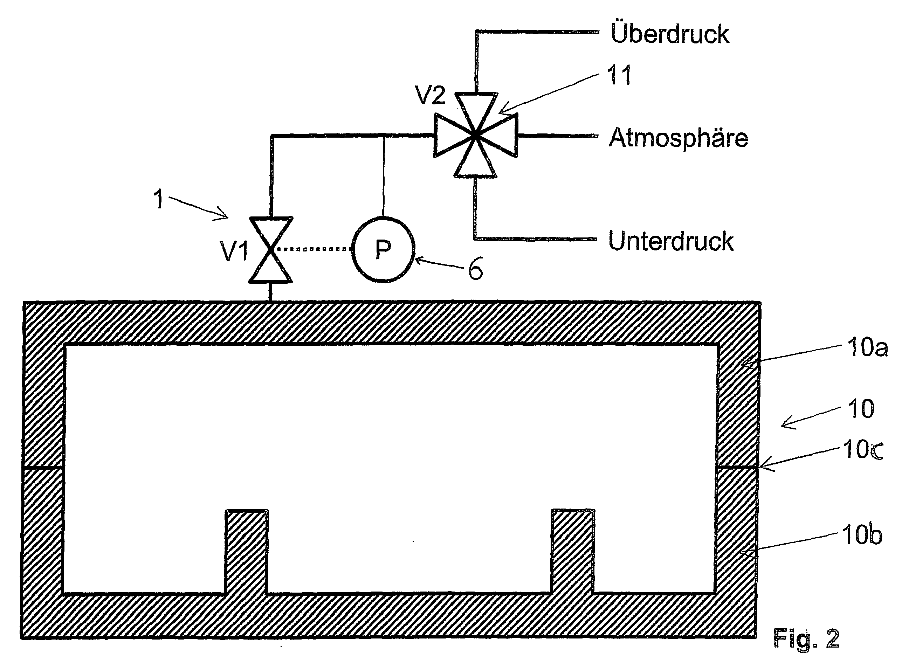

Figur 2 zeigt eine bevorzugte Ausführungsform für eine Vorrichtung gemäß der Erfindung. Man erkennt eine Form 10 mit einer oberen 10a und einer unteren Formhälfte 10b. Beide Formhälften sind durch die Formtrennebene 10c voneinander getrennt. Die Formebene 10c weist vorzugsweise eine Vakuumdichtung auf. Man erkennt weiterhin ein in der oberen Formhälfte 10a angeordnetes Nadelventil 1. Das Nadelventil 1 ist über ein Vierwege-Ventil 11 sowohl mit einer Unter- und einer Überdruckquelle (hier nicht dargestellt) als auch mit der Atmosphäre verbunden. Diese Anordnung erlaubt nicht nur das Absaugen während des Expansionsprozesses freigesetzter Gase über das Nadelventil 1 vorzunehmen, sondern auch noch das Evakuieren oder Belüften der Form 10 sowie die Beaufschlagung mit Überdruck. Das Ausgangssignal des Drucksensors 6 dient der Steuerung des Ventilantriebs des Nadelventils 1. Bei einem durch in das Ventil 1 eindringendes Polyurethan ausgelösten Druckabfall wird die Ventilnadel 3 nach unten ausgefahren und das Ventil 1 geschlossen, wobei das bereits eingedrungene Polyurethan wieder ausgestoßen wird.

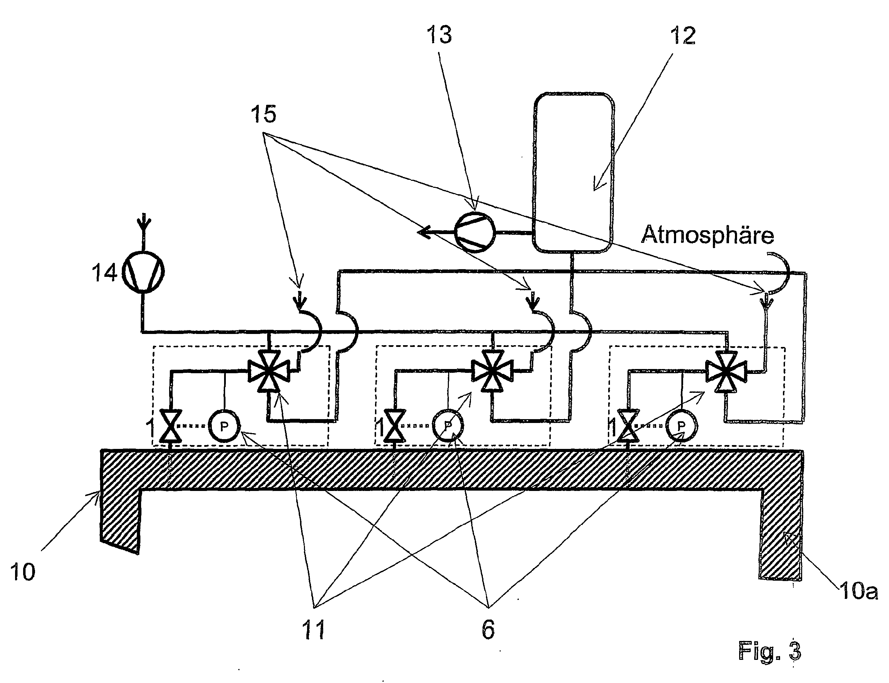

In Figur 3 ist die Anbindung mehrerer Ventile 1 an eine gemeinsame Medienversorgung dargestellt. Die Anordnung mehrerer Ventile kann bei flächig sehr ausgedehnten Formen sinnvoll sein, um den Druckverlust bei langen Fließwegen gen durch individuelle Unterdruckeinstellung an den Ventilen 1 zu kompensieren. Eine weitere Einsatzmöglichkeit sind Formen mit komplexer geometrischer Gestalt, insbesondere mit mehreren Stellen maximaler Höhe, um hier die Lunkerbildung zu vermeiden. Weitere Einsatzmöglichkeiten sind denkbar. Man erkennt in der Figur mehrere Nadelventile 1 mit Drucksensoren 6, die in der oberen Formhälfte 10a der Form 10 angeordnet sind. Die Nadelventile 1 sind jeweils über ein Vierwege-Ventil 11 an gemeinsame Versorgungsleitungen zu einer Unterdruck- bzw. Überdruckquelle 14 angeschlossen. Die Unterdruckquelle besteht hierbei aus einem Vakuumkessel 12, der mittels einer Vakuumpumpe 13 evakuierbar ist. Darüber hinaus weist jedes Vierwege-Ventil 11 noch einen Ausgang zur Atmosphäre auf. Das Vierwege-Ventil 11 ist vorzugsweise ein Proportionalventil, um trotz gemeinsamer Medienversorgung eine individuelle Einstellung des Unterdrucks an jedem Ventil 1 zu ermöglichen.

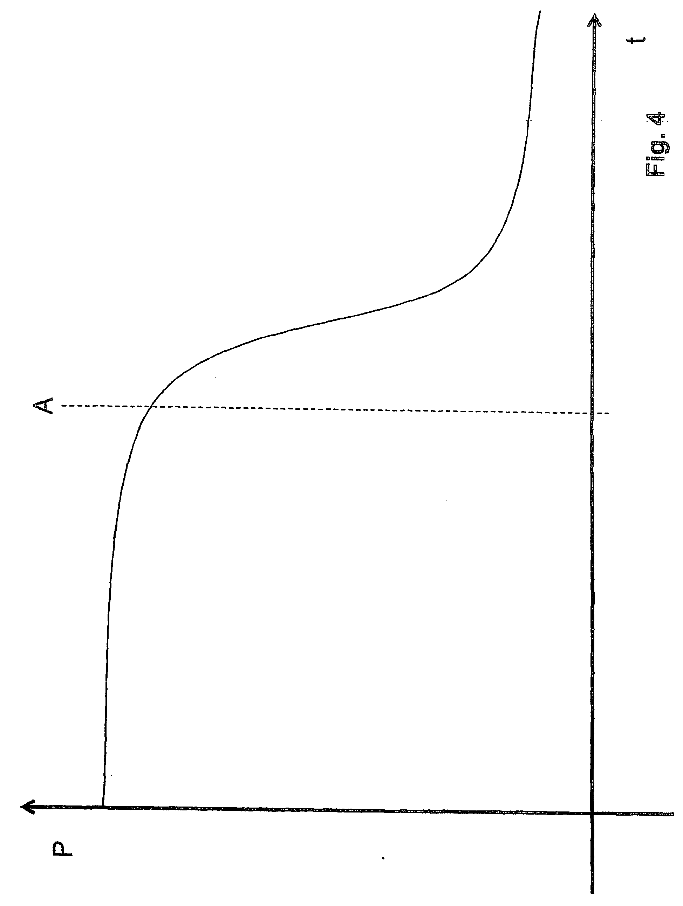

Figur 4 zeigt den Druckverlauf mit dem steuerungsauslösenden Druckabfall, wenn die Schaumfront die Ventilkapillare erreicht. Der Druck sinkt, wie man erkennen kann, beim Eindringen der Schaumfront (Zeitpunkt A) schlagartig ab. Die schon vorher zu beobachtende leichte Druckabsenkung ist auf die Viskositätserhöhung des Reaktionsgemisches während der fortschreitenden Polymerisationsreaktion zurückzuführen. Der steile Druckabfall beim Eindringen der Schaumfront wird durch den Drucksensor erfasst und als Auslöser zum Schließen des Ventils verwendet.

## Patentansprüche

1. Verfahren zur Herstellung geschäumter Polyurethan-Formkörper, bei welchem eine expandierbare Polyurethan-Reaktivmischung in eine Form (10) eingefüllt und die Form (10) evakuiert wird, bei dem die Reaktivmischung nach dem Einfüllen die Form (10) ausfüllend expandiert, wobei die während des Expansionsprozesses freigesetzten Gase durch an mindestens einer Stelle maximaler Höhe in der oberen Formhälfte (10a) angeordnete Expansionsöffnung abgesaugt werden, die durch ein Ventil verschließbar ist, wobei nach dem Abbinden die Form (10) belüftet und der Formkörper ausgeworfen wird, wobei der zeitliche Druckverlauf im Ventil erfasst und zur Steuerung verwendet wird, wobei die Steuerung so ausgelegt ist, dass das Ventil bei dem durch das Eindringen der Schaumfront im Ventil ausgelösten Druckabfall schließt, **dadurch gekennzeichnet, dass** die Expansionsöffnung durch ein Nadelventil (1), gebildet wird und das angesteuerte Ventil das Nadelventil (1) ist.

2. Verfahren nach Anspruch 1, **dadurch gekennzeichnet, dass** das Nadelventil (1) zusätzlich zur Evakuierung der Form nach dem Einfüllen der Reaktivmischung genutzt werden.

3. Verfahren nach Anspruch 1 oder 2, **dadurch gekennzeichnet, dass** das Nadelventil (1) zusätzlich zum Befüllen der Form (10) benutzt wird.

4. Verfahren nach einem der Ansprüche 1 bis 3, **dadurch gekennzeichnet, dass** das Nadelventil (1) zusätzlich zur Beaufschlagung der Form (10) mit Pressluft zur Entnahmeunterstützung genutzt wird.

5. Verfahren nach einem der Ansprüche 1 bis 4, **dadurch gekennzeichnet, dass** mehrere Nadelventile (1) jeweils in einer gemeinsamen Medienversorgung mit Unterdruck bzw. Pressluft versorgt werden.

6. Verfahren nach einem der Ansprüche 1 bis 5, **dadurch gekennzeichnet, dass** bei mehreren Nadelventilen (1) der Unterdruck individuell eingestellt wird.

7. Vorrichtung zur Durchführung des Verfahrens nach einem der Ansprüche 1 bis 6, umfassend eine Form (10) mit einem oberen Formbereich (10a), in an mindestens einer Stelle maximaler Höhe eine Expansionsöffnung vorgesehen ist, die bei dem durch das Eindringen der Schaumfront ausgelösten Druckabfall durch ein Ventil verschließbar ist, **dadurch gekennzeichnet, dass** das Ventil durch ein in einer Ventilkapillare aufgenommene Ventilnadel (3) gebildet ist, und dass das angesteuerte Ventil das Nadelventil (1) ist.

8. Vorrichtung nach Anspruch 7 oder 8, **dadurch gekennzeichnet, dass** die Form (10) über das Nadelventil (1) zusätzlich noch mit Pressluft beaufschlagbar ist.

9. Vorrichtung nach einem der Ansprüche 7 oder 8, **dadurch gekennzeichnet, dass** das Nadelventil (1) mit einem VierWegeventil (11) in Reihe geschaltet ist, über welches eine Verbindung zu einer Unter- (12, 13, bzw. Überdruckquelle (14) sowie zum Atmosphärendruck (15) herstellbar ist.

10. Vorrichtung nach Anspruch 9, **dadurch gekennzeichnet, dass** das Vierwegeventil ein Proportionalventil ist.

11. Vorrichtung nach einem der Ansprüche 7 bis 10, **dadurch gekennzeichnet, dass** mehrere Nadelventile (1) jeweils aus einer gemeinsamen Medienversorgung mit Unterdruck bzw. Pressluft versorgbar sind.

## Claims

1. A method for producing expanded polyurethane moulded bodies, in which an expandable polyurethane reactive mixture is introduced into a mould (10) and the mould (10) is evacuated, in which, after being introduced, the reactive mixture is made to expand, filling the mould (10), the gases released during the expansion process being extracted through at least one expansion opening which is arranged at point of maximum height in the upper mould half (10a) and can be closed by a valve, the mould (10) being ventilated after setting has taken place and the moulded body being ejected, the variation of pressure in the valve over time being sensed and used for control purposes, the control being designed in such a way that the valve closes when the pressure drop is triggered by the penetration of the foam front in the valve, **characterized in that** the expansion opening is formed by a needle valve (1), and the activated valve is the needle valve (1).

2. A method according to claim 1, **characterized in that** the needle valve (1) is additionally used for evacuating the mould after introducing the reactive mixture.

3. A method according to claim 1 or 2, **characterized in that** the needle valve (1) is additionally used for filling the mould (10).

4. A method according to any one of claims 1 to 3, **characterized in that** the needle valve (1) is additionally used for subjecting the mould (10) to compressed air to assist removal.

5. A method according to any one of claims 1 to 4, **characterized in that** a number of needle valves (1) are respectively supplied with negative pressure or compressed air in a common media supply.

6. A method according to any one of claims 1 to 5, **characterized in that**, in the case of a number of needle valves (1), the negative pressure is individually set.

7. A device for carrying out the method according to any one of claims 1 to 6, comprising a mould (10) with an upper mould region (10a), in which at least one expansion opening is provided at a point of maximum height and can be closed by a valve when the pressure drop is triggered by the penetration of the foam front, **characterized in that** the valve is formed by a valve needle (3) accommodated in a valve capillary, and **in that** the activated valve is the needle valve (1).

8. A device according to claim 7 , **characterized in that** the mould (10) can also be additionally subjected to compressed air via the needle valve (1).

9. A device according to either one of claims 7 and 8, **characterized in that** the needle valve (1) is arranged in series with a four-way valve (11), by means of which a connection with a negative pressure source (12, 13) or positive pressure source (14) and with atmospheric pressure (15) can be established.

10. A device according to claim 9, **characterized in that** the four-way valve is a proportional valve.

11. A device according to any one of claims 7 to 10, **characterized in that** a number of needle valves (1) can respectively be supplied with negative pressure or compressed air from a common media supply.

## Revendications

1. Procédé pour la fabrication de corps moulés en polyuréthane transformés en mousse, dans lequel un mélange réactionnel de polyuréthane expansible est introduit dans un moule (10) et l'air est évacué du moule (10), le mélange réactionnel, après son introduction dans le moule (10), remplissant ce dernier par expansion, les gaz libérés au cours du processus d'expansion étant aspirés par une ouverture d'expansion disposée à au moins un endroit situé à une hauteur maximale dans la moitié de moule supérieure (10a), ladite ouverture pouvant être fermée par une soupape, dans lequel, après la prise, le moule (10) est ventilé et le corps moulé est éjecté, l'allure temporelle de la pression régnant dans la soupape étant enregistrée et utilisée pour la commande, la commande étant prévue de telle sorte que la soupape se ferme lors de la chute de pression déclenchée par la pénétration du front de mousse dans la soupape, **caractérisé en ce que** l'ouverture d'expansion est formée par une soupape à pointeau (1), la soupape commandée étant la soupape à pointeau.

2. Procédé selon la revendication 1, **caractérisé en ce que** la soupape à pointeau (1) est utilisée en outre pour l'évacuation de l'air dans le moule après l'introduction du mélange réactionnel.

3. Procédé selon la revendication 1 ou 2, **caractérisé en ce que** la soupape à pointeau (1) est utilisée en outre pour le remplissage du moule (10).

4. Procédé selon l'une quelconque des revendications 1 à 3, **caractérisé en ce que** la soupape à pointeau (1) est utilisée en outre pour l'alimentation du moule (10) avec de l'air comprimé pour faciliter le retrait.

5. Procédé selon l'une quelconque des revendications 1 à 4, **caractérisé en ce que** plusieurs soupapes à pointeaux (1) sont respectivement alimentées dans une alimentation de milieux commune avec du vide, respectivement avec de l'air sous pression.

6. Procédé selon l'une quelconque des revendications 1 à 5, **caractérisé en ce que**, en présence de plusieurs soupapes à pointeaux (1), le réglage du vide a lieu de manière individuelle.

7. Dispositif pour la mise en oeuvre du procédé selon l'une quelconque des revendications 1 à 6, comportant un moule (10) comprenant une zone de moule supérieure (10a), une ouverture d'expansion étant prévue à au moins un endroit de hauteur maximale, qui peut être fermée par une soupape lors de la chute de pression déclenchée par la pénétration du front de mousse, **caractérisé en ce que** la soupape est formée par un pointeau de soupape (3) logé dans un capillaire de soupape, et **en ce que** la soupape commandée est la soupape à pointeau (1).

8. Dispositif selon la revendication 7 **caractérisé en ce que** le moule (10) peut être en outre alimenté avec de l'air comprimé via la soupape à pointeau (1).

9. Dispositif selon l'une quelconque des revendications 7 ou 8, **caractérisé en ce que** la soupape à pointeau (1) est montée en série avec une soupape à quatre voies (11), par laquelle on peut obtenir une liaison à une source de vide (12, 13), respectivement à une source de surpression (14), ainsi qu'à la pression atmosphérique (15).

10. Dispositif selon la revendication 9, **caractérisé en ce que** la soupape à quatre voies est une soupape proportionnelle.

11. Dispositif selon l'une quelconque des revendications 7 à 10, **caractérisé en ce que** plusieurs soupapes à pointeaux (1) peuvent être alimentées respectivement à partir d'une alimentation de milieux commune avec du vide, respectivement avec de l'air comprimé.
